# EUROPEAN PATENT APPLICATION

(11) **EP 2 001 155 A2**
(43) Date of publication of application: **10.12.2008**
(21) Application number: 08007473.5
(22) Date of filing: 16.04.2008
(51) Int. Cl.: H04L 9/32

(54) **Validation server, program and verfication method**

(30) Priority: 04.06.2007 JP 2007148204
(71) Applicant: Hitachi, Ltd., Chiyoda-ku Tokyo 100-8280 (JP)
(72) Inventor: Hashimoto, Yoko, c/o Hitachi, Ltd., Chiyoda-ku, Tokyo 100-8220 (JP); Fujishiro, Takahiro, c/o Hitachi, Ltd., Chiyoda-ku, Tokyo 100-8220 (JP); Furuya, Masahiko, c/o Hitachi, Ltd., Chiyoda-ku, Tokyo 100-8220 (JP); Uzawa, Masami, Hitachi, Ltd., chiyoda-ku, Tokyo 100-8220 (JP)
(74) Representative: Strehl Schübel-Hopf & Partner

(57) **Abstract**

A technique of managing public keys updated by a certificate authority and a plurality of hash algorithms is provided.

Identifiers, each of which is uniquely determined by a pair of a public key updated by a certificate authority and a hash algorithm, are stored in an identifier information storage area (131b). A verification processing part (132c) cross-checks a received validation request and the identifiers stored in the identifier information storage area (131b). When there is an identifier corresponding to the received validation request, the verification processing part (132c) judges that the verification can be performed, and continues the verification processing.

## Description

### INCORPORATION BY REFERENCE

This application claims priority based on a Japanese patent application, No. 2007-148204 filed on Jun 4, 2007, the entire contents of which are incorporated herein by reference.

### BACKGROUND OF THE INVENTION

The present invention relates to a technique of verifying a public key certificate.

By adding an electronic signature and a public key certificate of a sender of electronic data such as an electronic document to the object electronic data at the time when the object electronic data are sent, it is possible for a recipient to confirm the validity of the electronic signature (hereinafter, also referred to simply as the signature) and the public key certificate (hereinafter, referred to simply as the certificate) added to the received data and to confirm that the received data have not been modified and are assuredly the electronic data sent from the sender himself.

Issue of a public key certificate and confirmation of the validity of a public key certificate are performed by a public key infrastructure, and its standard specification is prescribed, for example, in RFC3280 (Internet X.509 Public Key Infrastructure Certificate and CRL Profile).

When, for example, contents described in a certificate are changed within the validity period or the corresponding private key was compromised, the certificate is revoked by a Certificate Authority (hereinafter, also referred to as CA) who has issued the certificate, and becomes an invalid certificate. Thus, in order to confirm the validity of a certificate, a recipient examines whether the certificate has been revoked or not.

A Certificate Revocation List (hereinafter, referred to as CRL) issued by the certificate authority is used for examining whether a certificate has been revoked or not. A CRL describes serial numbers of revoked certificates among certificates that have been issued by the certificate authority concerned and are within their respective terms of validity. A CRL carries a signature of the certificate authority and is periodically issued by the certificate authority. A recipient of electronic data obtains a CRL from the certificate authority, and examines whether the serial number of the certificate in question is described in the CRL. When the serial number is described in the CRL, the recipient judges that the certificate has been revoked and is now invalid. Otherwise, the recipient judges that the public key certificate has not been revoked.

However, in the case where a very large number of certificates are issued by a certificate authority and a large number of certificates become revoked, the volume of a CRL becomes massive and sometimes it takes a lot of time to examine the validity of a certificate. For example, it takes a lot of time for a recipient to obtain a CRL. To cope with this, it is possible that a server (hereinafter, referred to as a validation server) provides a service by receiving on-line a confirmation request for confirmation whether a certificate has been revoked and by responding to the request. The standard specification for this is prescribed in The Internet Engineering Task Force (IETF), X.509 Internet Public Key Infrastructure Online certificate Status Protocol-OCSP (RFC2560), page 4 [2.5 Response Pre-production], June 1999, <URL: http//ietf.org/rfc/rfc2560.txt>.

A validation server periodically takes, in advance, a CRL issued by a certificate authority. When the validation server receives a certificate revocation confirmation request (hereinafter, referred to as a "validation request") from a terminal apparatus used by a recipient who requests confirmation of revocation of a certificate, then the validation server examines whether the serial number of the certificate is described in the obtained CRL and answers the terminal apparatus by giving notification as to whether the certificate has been revoked or not. A signature of the validation server and the certificate are added to an answer message (hereinafter, referred to as a "validation result") sent from the validation server to the terminal apparatus. As a result, the user of the terminal apparatus can confirm that the validation result is surely sent from the validation server.

### SUMMARY OF THE INVENTION

According to the technique disclosed in the above document, in the case where keys of certificate authorities are updated or where a plurality of hash algorithms are used by a terminal apparatus, sometimes the validation server can not validate a certificate unless the generations of the keys or the hash algorithms are managed suitably to know which certificate authority (specifiable by its name and public key) corresponds to the certificate as the object of validation or which hash algorithm is used by the terminal apparatus among the plurality of hash algorithms.

Thus, the present invention provides a technique of managing generations of keys of certificate authorities and a plurality of hash algorithms efficiently.

The present invention solves the above problems by storing identification information in advance that is determined uniquely by a combination of key information (a public key) of a certificate authority and a hash algorithm.

For example, the present invention provides a validation server for validating a public key certificate, comprising: a storage part that stores first identification information determined uniquely by key information of a certificate authority and a hash algorithm, respectively; and a processing part, which judges that validation requested by a validation request can be performed if the storage part stores first identification information corresponding to second identification information determined by the certificate authority's key information included in the validation request and the hash algorithm used in producing the validation request.

As a result, generations of keys of certificate authorities and a plurality of hash algorithms can be managed efficiently. Thus, even when a CA updates its key or a terminal apparatus uses a plurality of hash algorithms, a CRL corresponding to a validation request can be specified efficiently, and it is possible to examine whether the certificate concerned has been revoked or not.

Thus, according to the present invention, it is possible to manage efficiently public keys updated by certificate authorities and a plurality of hash algorithms, and to shorten the period of time between reception of a validation request and response to the request.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a block diagram showing an example of a verification system as one embodiment of the present invention;
Fig. 2 is a diagram showing an example of a functional configuration of a terminal apparatus;
Fig. 3 is a diagram showing an example of a functional configuration of a CA apparatus;
Fig. 4 is a diagram showing an example of a functional configuration of a validation server;
Fig. 5 is a diagram showing an example of a configuration of a CA identifier table;
Fig. 6 is a diagram showing an example of a configuration of a revocation information table;
Fig. 7 is a diagram showing an example of a configuration of a validation result table;
Fig. 8 is a block diagram showing a hardware configuration of a computer;
Fig. 9 is a flowchart showing an example of processing performed when the validation server updates a CRL;
Fig. 10 is a flowchart showing an example of processing of updating the validation result table in the validation server;
Fig. 11 is a flowchart showing an example of processing for verifying a certificate in the validation server; and
Fig. 12 is a flowchart showing an example of processing for verifying a certificate in the validation server.

### DETAILED DESCRIPTION OF THE EMBODIMENTS

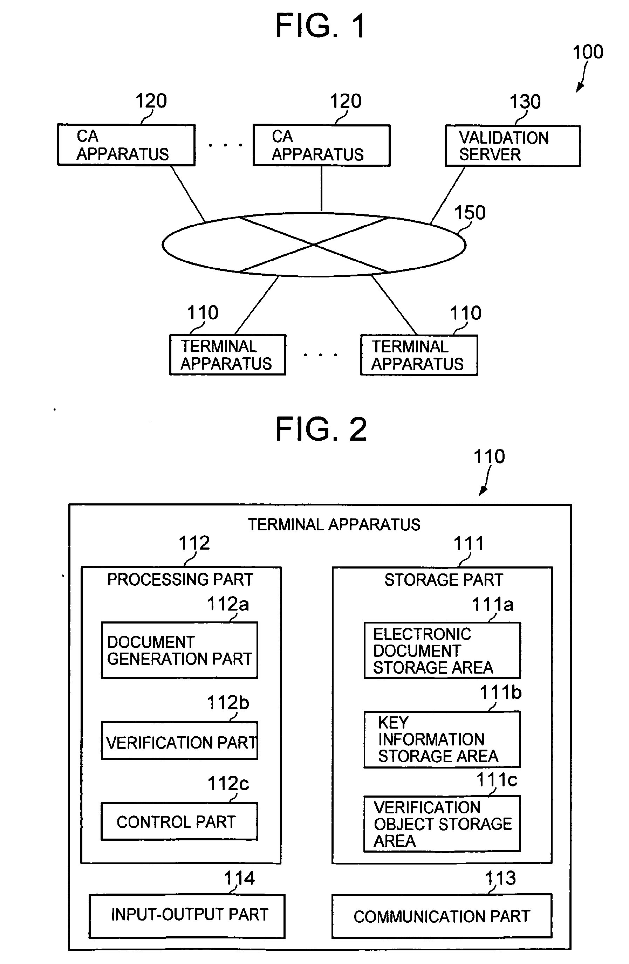

Fig. 1 is a block diagram showing a verification system 100 as one embodiment of the present invention;

As shown in the figure, the verification system 100 comprises terminal apparatuses 110, CA apparatuses 120 and a validation server 130. It is arranged that the terminal apparatuses 110, the CA apparatuses 120 and the validation server 130 can send and receive information to and from one another through a network 150.

In the verification system 100, a terminal apparatus 110 requests the validation server 130 to verify a certificate; a CA apparatus 120 issues and revokes a certificate; and the validation server 130 verifies a certificate.

Fig. 2 is a schematic block diagram showing a terminal apparatus 110.

Each terminal apparatus 110 comprises a storage part 111, a processing part 112, a communication part 113, and an input-output part 114.

The storage part 111 comprises: an electronic document storage area 111a for holding electronic documents produced by a user; a key information storage area 111b for storing a private key for generating a signature, a certificate of a public key as a counterpart of the private key, and a CA certificate of a CA trusted by the user using the terminal apparatus 110; and a verification object storage area 111c for storing a signed electronic document and a certificate received from another terminal apparatus 110.

The processing part 112 comprises: a signed document generation part 112a for giving a signature to an electronic document to generate a signed document; a verification part 112b for verifying a signature of a signed electronic document and for verifying a certificate; and a control part 112c for controlling the parts of the terminal apparatus in an integrated manner.

The communication part 113 sends and receives information to and from another apparatus through the network 150.

The input-output part 114 outputs and inputs electronic documents produced by the user of the terminal apparatus 110 and electronic documents received from another terminal apparatus 110, and receives instructions from the user.

When in this configuration the control part 112c receives an instruction from the user through the input-output part 114 to send an electronic document held in the electronic document storage area 111a to a terminal apparatus 110 of another user, the control part 112c reads the electronic document in question from the electronic document storage area 111a and delivers the document to the document generation part 112a.

The document generation part 112a generates a signature for the electronic document by using the private key stored in the key information storage area 111b. Then, the document generation part 112a adds the generated signature to the received electronic document to generate a signed electronic document.

The control part 112 sends the signed electronic document generated in the document generation part 112a and the certificate stored in the key information storage area 111b to the terminal apparatus 110 designated by the user, through the communication part 113.

Further, when the control part 112c receives a signed electronic document and a certificate from another terminal apparatus 110 through the communication part 113, the control part 112c stores these in association with each other in the verification object storage area 111c. At the same time, the control part 112c sends a request for verification of these signed electronic document and the certificate to the verification part 112b.

Receiving the request, the verification part 112b verifies the signature of the signed electronic document stored in the verification object storage area 111c by using the certificate stored in association with the signed electronic document in question. Then, the verification part 112b stores, as a verification object certificate, the certificate used for verification of the signature of the signed electronic document to the key information storage area 111b.

Further, the verification part 112b verifies the verification object certificate stored in the key information storage area 111b by using the CA certificate of the CA trusted by the user. Here, in the process of verifying the verification object certificate, the verification part 112b verifies the signature of the verification object certificate, examines whether the validity period has not expired, verifies the other restrictions, and examines whether the verification object certificate has been revoked.

The verification part 112b sends a validation request to the validation server 130 in order to examine whether the verification object certificate has been revoked or not. In the case where all verification processes end in success and a validation result is received from the validation server 130 to the effect that the certificate in question has not been revoked, then the verification part 112b judges the certificate as the verification object to be valid and the signed electronic document to be correct, and if necessary, outputs the signature of the signed electronic document and the validation result of the certificate through the input-output part 114.

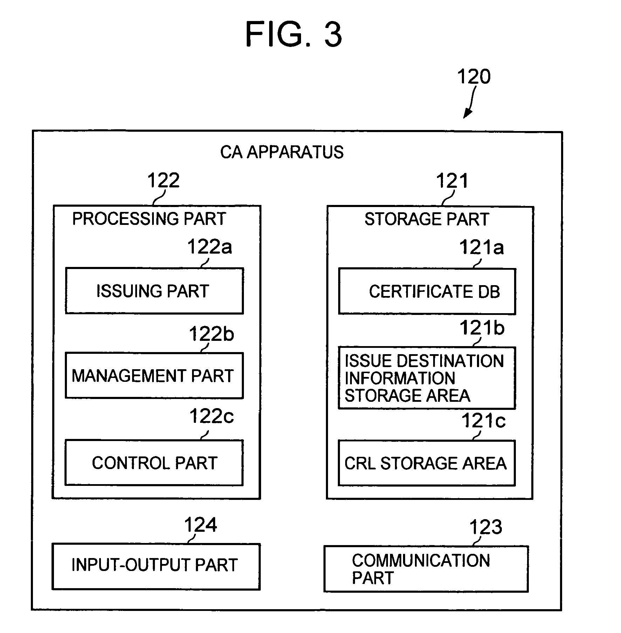

Fig. 3 is a schematic block diagram showing a CA apparatus 120.

As shown in the figure, each CA apparatus 120 comprises a storage part 121, a processing part 122, a communication part 123 and an input-output part 124.

The storage part 121 comprises: a certificate database (hereinafter, referred to as a certificate DB) 121a for storing a certificate issued by the below-described issuing part 122a; an issue destination information storage area 121b for storing an issue destination management list that records destinations of certificates held in the certificate DB 121a; and a CRL storage area 121c for storing a CRL.

The processing part 122 comprises: the issuing part 122a that issues a certificate; a management part 122b that manages certificates issued by the issuing part 122a; and a control part 122c that controls the parts of the CA apparatus 120 in an integrated manner.

The communication part 123 sends and receives information to and from another apparatus through the network 150.

The input-output part 124 inputs and outputs certificates and the like, receives instructions from the operator of the CA apparatus 120, and outputs processing results.

When in this configuration the control part 122c receives a request for issue of a certificate through the input-output part 124 or the communication part 123, then the control part 122c informs the issuing part 122a to that effect.

Receiving the issue request, the issuing part 122a generates a certificate in response to the request. At that time, the issuing part 122a signs the certificate by using a private key of the CA. Then, the issuing part 122a delivers the generated certificate to the requester of the certificate through the input-output part 124 or the communication part 123 by mail or via communication lines.

Further, the management part 122b registers the certificate in the certificate DB 121a and stores the information on the issue destination (i.e. the requester) in the issue destination management list stored in the issue destination information storage area 121b.

When the control part 122c receives a request for revocation of a certificate, the control part 122c informs the management part 122b to that effect. Receiving the information, the management part 122b deletes the certificate as the object of revocation from the certificate DB 121a, and deletes the information on the issue destination of the certificate from the issue destination management list stored in the issue destination information storage area 121b.

Further, the management part 122b periodically generates a certificate revocation list (CRL) that describes serial numbers of certificates deleted from the certificate DB 121a owing to revocation requests, and stores the generated CRL in the CRL storage area 121c. Here, the generated CRL lists serial numbers of certificates that has been revoked even though they are within the validity period as well as dates of and reasons for revocations of the certificates. Further, the generated CRL describes the scheduled time for generating the next CRL, and is signed by using the private key of the CA apparatus 120.

Further, when the control part 122c receives a CRL acquisition request from another apparatus through the communication part 123, the control part 122c sends the CRL stored in the CRL storage area 121c to the apparatus as the sender of the request, through the communication part 123.

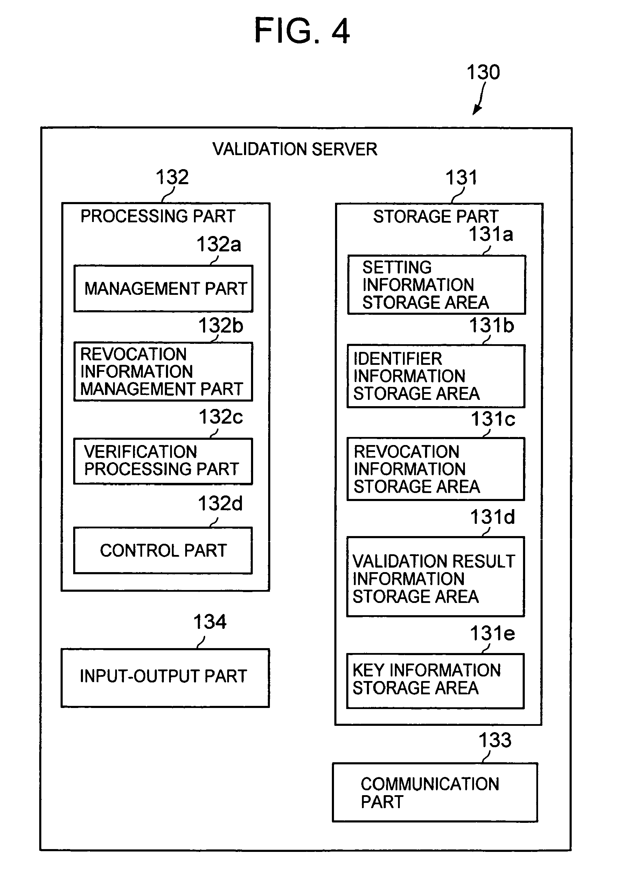

Fig. 4 is a schematic diagram showing the validation server 130.

As shown in the figure, the validation server 130 comprises a storage part 131, a processing part 132, a communication part 133, and an input-output part 134.

The storage part 131 comprises a setting information storage area 131a, an identifier information storage area 131b, a revocation information storage area 131c, a validation result information storage area 131d, and a key information storage area 131e.

The setting information storage area 131a stores information required for verification in the validation server 130.

For example, in the present embodiment, the setting information storage area 131a stores information required for verification of a CA certificate, a hash algorithm or the like and various kinds of setting information such as CRL update timing, validity period of validation result data, and the like.

The identifier information storage area 131b stores, for each CA, information specifying an identifier (CA identifier) that is specified from an update key and a hash algorithm of the CA.

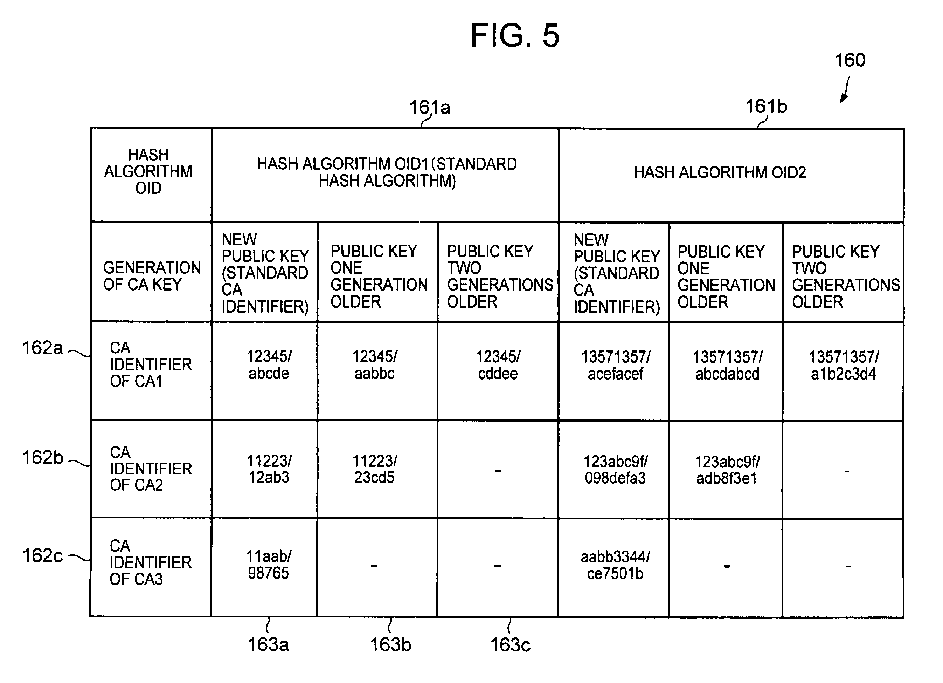

For example, in the present embodiment, the identifier information storage area 131b stores a CA identifier table 160 as shown in Fig. 5 (a schematic diagram showing the CA identifier table 160).

As shown in the figure, for each of hash algorithms, corresponding fields of the CA identifier table 160 store respective CA identifiers. Here, the CA identifiers are specified for respective CA certificates each having its updated public key.

In detail, the CA identifier table 160 has hash algorithm OID columns 161a and 161b (i.e. columns provided respectively for hash algorithms) and CA identifier rows 162a, 162b and 162c (i.e. rows provided respectively for CA apparatuses that perform verification using the validation server 130). Further, each hash algorithm OID column 161a, 161b has public key columns 163a, 163b and 163c (i.e. columns provided respectively for updated public keys).

In the CA identifier table 160 of this configuration, a field specified by a column and a row stores a CA identifier, which is a pair of two hash values (here, a concatenation of a hash value of a subject name (subject) and a hash value of a public key (subjectPublicKeyInfo) in a form "hash value of subject"/"hash value of subjectPublicKeyInfo") calculated by the hash algorithm corresponding to the hash algorithm OID column 161a, 161b of the field. Here, subject and subjectPublicKeyInfo are described in the CA certificate specified by the CA identifier row 162a, 162b or 162c and the public key column 163a, 163b or 163c of the field in question.

Among these CA identifiers, CA identifiers stored in fields that store the most recent public keys' hash values calculated by using the predetermined hash algorithm are defined as standard CA identifiers. In the present embodiment, among the CA identifiers stored in the hash algorithm OID1 column 161a of the CA identifier table 160, CA identifiers corresponding to the most recent public keys are determined as the standard CA identifiers, although this mode is not restrictive.

The CA identifier table 160 shown in Fig. 5 illustrates an example pattern where the validation server 130 supports two kinds of hash algorithms and three CAs, CA1, CA2 and CA3. In this example, the CA1 registers CA certificates for three generations of keys as a result of key update (the row 162a). The CA2 registers CA certificates for two generations of keys as a result of key update (the row 162b). The CA3 registers a CA certificate for one key since key update has not been performed (the row 162c). This CA identifier table 160 has been generated by calculating CA identifiers for all of these certificates.

The revocation information storage area 131c stores information for identifying revoked certificates.

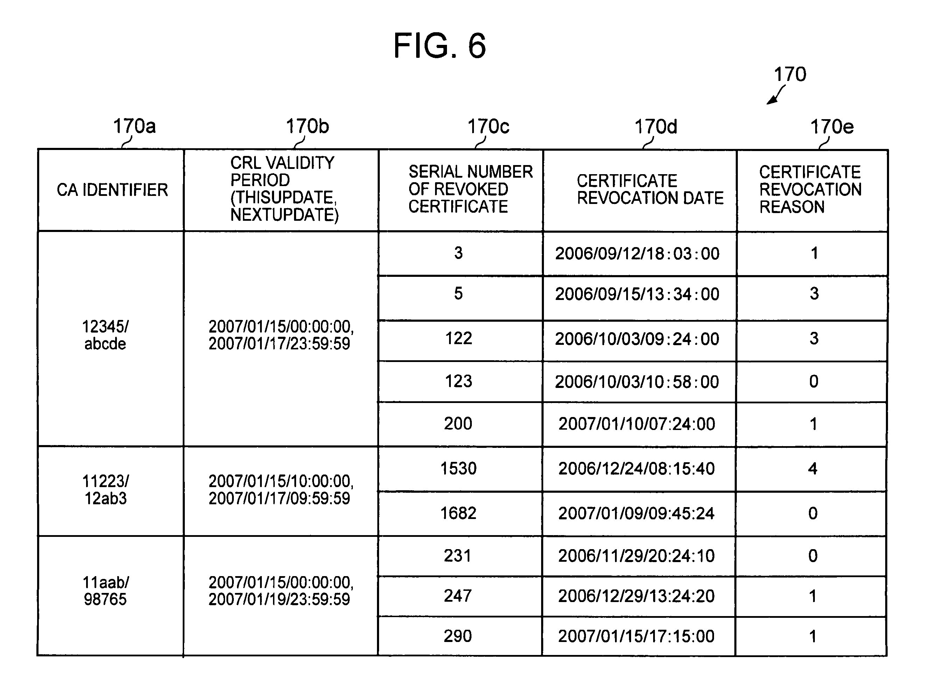

In the present embodiment, the revocation information storage area 131c stores a revocation information table 170 as shown in Fig. 6 (a schematic diagram showing the revocation information table 170).

As shown in the figure, the revocation information table 170 has a CA identifier column 170a, a CRL validity period column 170b, a revoked certificate's serial number column 170c, a certificate revocation date column 170d, and a certificate revocation reason column 170e. Each time a CRL is received from a CA apparatus 120, the row corresponding to the CA apparatus 120 is updated.

Each of the fields corresponding to the CA identifier column 170a stores information that identifies a CA. In the present embodiment, these fields store the standard CA identifiers.

Each of the fields corresponding to the CRL validity period column 170b stores information that specifies the validity period of the most recent CRL received from the CA apparatus 120 specified in the CA identifier column 170a.

Each of the fields corresponding to the revoked certificate's serial number column 170c stores information that specifies the serial number of a revoked certificate.

Each of the fields corresponding to the certificate revocation date column 170d stores information that specifies the date of revocation of the certificate specified in the revoked certificate's serial number column 170c.

Each of the fields corresponding to the certificate revocation reason column 170e stores information that specifies the reason for revocation of the certificate specified in the revoked certificate's serial number column 170c.

The validation result information storage area 131d stores signed validation result data for each CA.

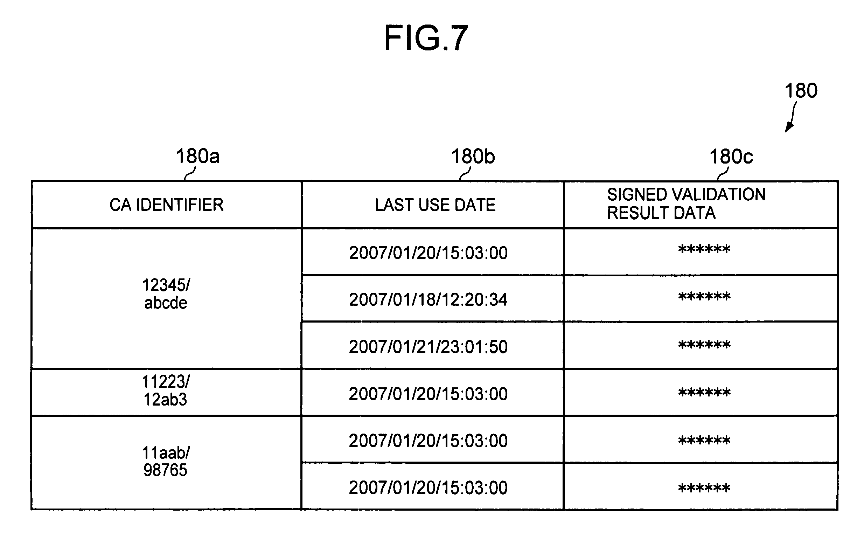

In detail, in the present embodiment, the validation result information storage area 131d stores a validation result table 180 as shown in Fig. 7 (a schematic diagram showing the validation result table 180).

As shown in the figure, the validation result table 180 has a CA identifier column 180a, a last use date column 180b, and a signed validation result data column 180c.

Each of the fields corresponding to the CA identifier column 180a stores information that identifies a CA. In the present embodiment, these fields store the standard CA identifiers.

Each of the fields corresponding to the last use date column 180b stores information that specifies the date of last use of signed validation result data stored in the field corresponding to the below-described signed validation result data column 180c.

Each of the fields corresponding to the signed validation result data column 180c stores signed validation result data.

The key information storage area 131e stores information that specifies a private key of the validation server 130.

The processing part 132 comprises a management part 132a, a revocation information management part 132b, a verification processing part 132c and a control part 132d.

The management part 132a registers CA certificates and hash algorithms in the setting information storage area 131a. Based on the registered CA certificates and hash algorithms, the management part 132a generates information to be stored in the CA identifier table 160 and stores each piece of the generated information into the corresponding field.

Further, the management part 132a stores the various kinds of setting information such as the CRL update timing, the validity period of signed validation result data, and the like into the setting information storage area 131a.

The revocation information management part 132b accesses the CA apparatuses 120 through the communication part 133 to acquire CRLs, generates the revocation information table 170 from the acquired CRLs, and stores the generated revocation information table 170 into the revocation information storage area 131c.

Further, the revocation information management part 132b reacquires CRLs according to the CRL update timing stored in the setting information storage area 131a, and updates the corresponding fields of the revocation information table 170.

Further, at the CRL update timing, the revocation information management part 132b updates or deletes the signed validation result data of the validation result table 180 stored in the validation result information storage area 131d.

The verification processing part 132c searches the verification table 180 for signed validation result data corresponding to a verification object certificate that is specified by a validation request received from a terminal apparatus 110 through the communication part 133. In the case where the corresponding signed validation result data exist, the verification processing part 132c returns the signed validation result data in question to the terminal apparatus 110 through the communication part 133. On the other hand, in the case where the signed validation result data do not exist, the verification processing part 132c refers to the CA identifier table 160 stored in the identifier information storage area 131b and the revocation information table 170 stored in the revocation information storage area 131c, in order to examine whether the verification object certificate has been revoked or not. Then, the verification processing part 132c generates signed validation result data according to the examination result, and returns the generated signed validation result data to the terminal apparatus 110 through the communication part 133, and at the same time stores the generated signed validation result data into the verification table 180 stored in the validation result information storage area 131d. Here, the signed validation result data are signed by using the private key of the validation server 130, which is stored in the key information storage area 131e. The signed validation result data are sent together with the certificate of the validation server 130 to the terminal apparatus 110.

The control part 132d controls the parts of the validation server 130 in an integrated manner.

In the above-described validation server 130, the operator registers in advance a CA certificate of a CA that the validation server 130 supports, and sets hash algorithms that the validation server 130 can receive.

The operator of the validation server 130 inputs a CA certificate into the validation server 130 through the input-output part 134. Receiving the input, the management part 132a stores the CA certificate in question in the setting information storage area 131a. In the case where the validation server 130 supports a plurality of CAs (i.e., takes CRLs issued by a plurality of CA apparatuses 120), the management part 132a similarly stores the CA certificates of the plurality of CAs.

Further, in the case where a CA updates its key and accordingly has a plurality of CA certificates, the management part 132a similarly stores a CA certificate of a new key and a CA certificate of an old key (or all CA certificates within their validity periods among CA certificates of old keys if such old keys of a plurality of generations exist).

As a result, the setting information storage area 131a holds CA certificates of all the CAs supported by the validation server 130. Or, in the case where those CAs update their keys, the setting information storage area 131a holds CA certificates of keys of all generations within their respective validity periods.

Further, the operator of the validation server 130 inputs, through the input-output part 134, object identifiers (hereinafter, referred to as OID_{S}) of the hash algorithms that the validation server 130 can receive. Receiving the input, the management part 132a stores the OIDs of the hash algorithms in question in the setting information storage area 131a.

In the case where the validation server 130 receives a plurality of hash algorithms, the management part 132a receives OIDs of those hash algorithms, and stores them similarly.

One of the stored hash algorithm OIDs is registered as a standard hash algorithm.

Then, after the registration of the CA certificates and the setting of the hash algorithms, the management part 132a of the validation server 130 generates a CA identifier table 160 as shown in Fig. 5 on the basis of the registered CA certificates and the set hash algorithms, and stores the generated CA identifier table 160 in the identifier information storage area 131b.

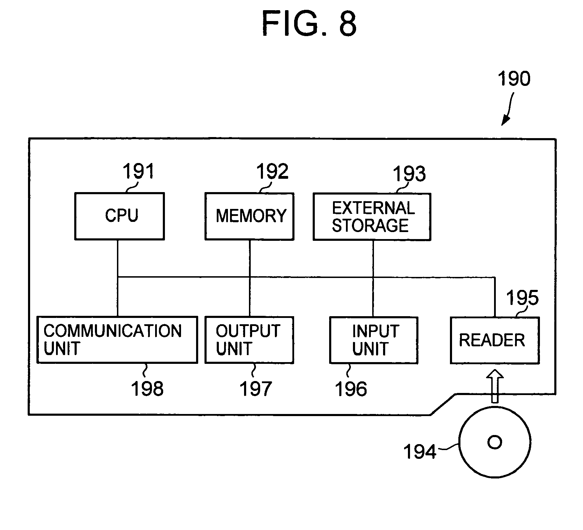

Each of the above-described terminal apparatuses 110, CA apparatuses 120 and validation server 130 can be implemented by an ordinary computer 190 comprising a CPU 191, a memory 192, an external storage 193 such as a hard disk or the like, a reader 195 for reading information from a portable storage medium such as a CD-ROM, an input unit 196 such as a keyboard or a mouse, an output unit 197 such as a monitor or a printer, a communication unit 198 such as a Network Interface Card (NIC), and an internal bus 199 for sending and receiving data between these components, as shown in Fig. 8 (a schematic block diagram showing the computer 190).

For example, the above-described processing parts can be implemented when the CPU 191 executes prescribed programs loaded onto the memory 192 from the external storage 193. Further, a communication part can be implemented by the CPU 191 utilizing the communication unit 198; an input-output part by the CPU 191 utilizing the input unit 196, the output unit 197 and the reader 195; and a storage part by the CPU 191 utilizing the memory 192 and the external storage 193.

The above-mentioned prescribed programs may be stored in advance in the external storage 193; or may be stored in a storage medium 194 usable to the computer 190 and read through the reader 195 at need; or may be downloaded at need from a network as a communication medium usable to the computer 190 or from another apparatus coupled to the communication unit 198 that uses a carrier wave propagating on the network, with the downloaded programs being stored in the external storage 193.

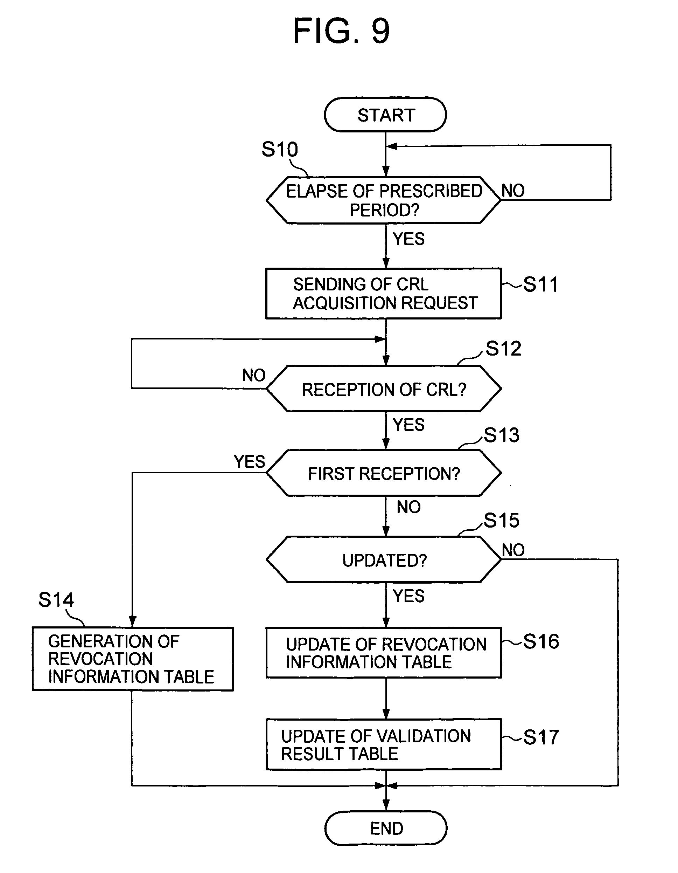

Fig. 9 is a flowchart showing processing performed when the validation server 130 updates a CRL.

First, after the elapse of a prescribed period specified by the CRL update timing stored in advance in the setting information storage area 131a by the operator of the validation server 130 (S10: Yes), the revocation information management part 132b of the validation server 130 sends a CRL acquisition request to a CA apparatus 120 through the communication part 133 (S11). Receiving the request, the CA apparatus 120 sends the corresponding CRL to the validation server 130.

Next, when the revocation information management part 132b of the validation server 130 receives the CRL from the CA apparatus 120 (S12: Yes), the revocation information management part 132b examines whether it is the first reception of a CRL (S13). This can be done by examining whether a revocation information table 170 is stored in the revocation information storage area 131c or not.

In the case of the first reception of a CRL (S13: Yes), the revocation information management part 132b of the validation server 130 generates a revocation information table 170 and stores information specified by the received CRL into the corresponding fields of the table 170 (S14) and ends the processing.

In detail, as keys for specifying a CA certificate corresponding to the acquired CRL among the CA certificates stored in the setting information storage area 131a, the revocation information management part 132b uses values of the issuer's name (issuer) and the certification authority key identifier (authorityKeyIdentifier) described in the acquired CRL. The revocation information management part 132b acquires the specified CA certificate. Then, the revocation information management part 132b calculates the CA identifier from the acquired CA certificate by using the standard hash algorithm, and stores the CA identifier into the corresponding fields of the CA identifier column 170a of the generated revocation information table 170.

Further, the revocation information management part 132b stores the validity period (thisUpdate, nextUpdate) in the acquired CRL into the corresponding field of the revocation information table 170, i.e. the field that is in the CRL validity period column 170b and corresponds to the CA identifier in question; stores the serial numbers of the revoked certificates (revokedCertificates) described in the CRL into the corresponding fields of the revocation information table 170, i.e. the fields that are in the revoked certificate's serial number column 170c and correspond to the CA identifier; stores the revocation dates (revocationDate) of the revoked certificates into the corresponding fields in the certificate revocation date column 170d; and stores the reasons for revocations (reasonCode) of the revoked certificates into the corresponding fields in the certificate revocation reason column 170e. As for the reasons for revocations (reasonCode), the meaning of each reason code number is prescribed in RFC3280.

Next, the revocation information management part 132b examines whether the received CRL is an updated one or not (S15). That is, in the case where the validity period of the CRL received from the CA is more recent than the validity period of the CRL acquired last time from the CA in question, it is judged that the CRL of the CA in question is an updated one, and the processing proceeds to step S16. On the other hand, in the case where the information (such as the validity period) of the CRL is not changed from the CRL acquired last time from the CA in question, it is judged that the CRL of the CA in question is not updated, and the processing is ended.

When it is judged in step S15 that the CRL is an updated one, then the revocation information management part 132b updates the revocation information table 170 on the basis of the acquired CRL (S16).

In detail, as keys for specifying a CA certificate corresponding to the acquired CRL among the CA certificates stored in the setting information storage area 131a, the revocation information management part 132b uses the values of the issuer's name (issuer) and the certification authority key identifier (authorityKeyIdentifier) specified in the acquired CRL. The revocation information management part 132b acquires the specified CA certificate. Then, the revocation information management part 132b calculates the CA identifier from the acquired CA certificate by using the standard hash algorithm.

Next, the revocation information management part 132b refers to the CA identifier table 160 stored in the revocation information storage area 131c to search for the calculated CA identifier, and acquires the corresponding standard CA identifier.

Then, using the acquired standard CA identifier as a key, the revocation information management part 132b searches for the corresponding CA identifier in the CA identifier column 170a of the revocation information table 170 stored in the revocation information storage area 131c. In the case where a corresponding CA identifier does not exist, the revocation information management part 132b judges that the CRL is one of a new CA, adds a new line to the revocation information table 170, and stores the acquired standard CA identifier in the field of the CA identifier column 170a.

Further, the revocation information management part 132b stores the validity period (thisUpdate, nextUpdate) of the acquired CRL into the corresponding field of the revocation information table 170, i.e. the field that is in the CRL validity period column 170b and corresponds to the CA identifier in question; stores the serial numbers of the revoked certificates (revokedCertificates) described in the CRL into the fields in the revoked certificate's serial number column 170c of the revocation information table 170; stores the revocation dates (revocationDate) in the CRL into the fields in the certificate revocation date column 170d; and stores the reasons for revocations (reasonCode) of the revoked certificates into the fields in the revocation reason column 170e.

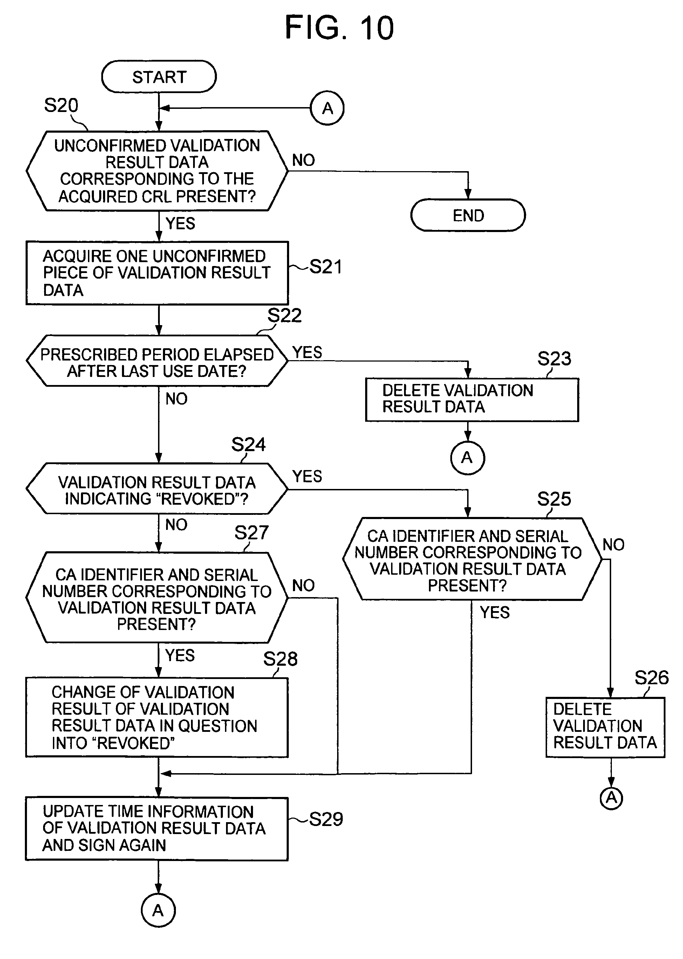

When the processing of updating the revocation information table 170 is finished in step S16, the revocation information management part 131c updates the validation result table 180 (S17). This processing will be described in detail referring to the flowchart of Fig. 10.

In the case where the validation server 130 supports a plurality of CAs, the CRL update processing shown in Fig. 9 is performed repeatedly by the number of the CAs. The present embodiment describes the example of supporting three CAs. Thus, the CRL update processing shown in the flowchart of Fig. 9 is performed three times.

Fig. 10 is a flowchart showing the processing performed when the validation server 130 updates the validation result table 180.

The revocation information management part 132b examines whether the validation result table 180 includes signed validation result data that correspond to a CRL acquired by the CRL update processing and have not been confirmed according to this flow yet (S20).

In detail, using the standard CA identifier of the CRL in question as a key, the revocation information management part 132b searches the CA identifier column 180a of the validation result table 180 in order to examine whether there are signed validation result data that correspond to the standard CA identifier and have not been confirmed according to this flow yet.

In the case where unconfirmed signed validation result data corresponding to the CRL do not exist in the validation result table 180 (S20: No), then it is judged that there are no data to be updated with respect to the CRL in question, and the processing of updating the validation result table is ended.

On the other hand, in the case where the validation result table 180 includes unconfirmed signed validation result data corresponding to the CRL in question (S20: Yes), then the flow proceeds to step S21. In S21, the revocation information management part 132b specifies one piece of signed validation result data that have not been unconfirmed and performs the following processing with respect to the signed validation result data specified.

The revocation information management part 132b acquires the last use date corresponding to the signed validation result data specified in step S21 from the last use date column 180b of the validation result table 180, in order to examine whether, since the last use date, elapsed time has exceeded the cache validity period stored in the setting information storage area 131a (S22). In the case where elapsed time has exceeded the cache validity period (S22: Yes), the revocation information management part 132b deletes the data relating to the signed validation result data in question from the validation result table 180 (S23), and the flow returns to step S20 to repeat the processing.

On the other hand, in the case where elapsed time has not exceeded the cache validity period (S22: No), the revocation information management part 132b refers to the contents of the signed validation result data specified in step S21 in order to examine whether the validation result shows "revoked" or not (S24).

Then, in the case where the validation result of the signed validation result data is "revoked" (S24: Yes), the revocation information management part 132b examines whether data corresponding to the CA identifier and the serial number described in the signed validation result data in question exist in the revocation information table 170 (S25).

In the case where data corresponding to the signed validation result data do not exist in the revocation information table 170 (S25: No), the revocation information management part 132b deletes the signed validation result data in question from the validation result table 180 (S26), and the flow returns to step S20 to repeat the processing.

On the other hand, in the case where data corresponding to the signed validation result data exist in the revocation information table 170 (S25: Yes), the flow proceeds to step S29.

Further, in the case where the signed validation result data in question are not "revoked" (S24: No), the revocation information management part 132b examines whether data corresponding to the CA identifier and the serial number described in the signed validation result data in question exist in the revocation information table 170 (S27).

In the case where data corresponding to the signed validation result data in question exist in the revocation information table 170 (S27: Yes), the revocation information management part 132b changes the validation result of the signed validation result data into "revoked" (S28), and proceeds to step S29.

On the other hand, in the case where data corresponding to the signed validation result data in question do not exist in the revocation information table 170 (S27: No), the flow proceeds to step S29.

In step S29, the revocation information management part 132b updates the production date (producedAt) of the signed validation result data in question and the revocation information's validity period (thisUpdate/nextUpdate) both described in the signed validation result data, and adds the signature of the validation server 130 again, and stores the validation result data into the validation result table 180 again.

Then, the revocation information management part 132b returns to step S20 to repeat the processing.

By performing the above processing, the validation result data stored in the validation result table 180 are updated, and unnecessary signed validation result data are deleted.

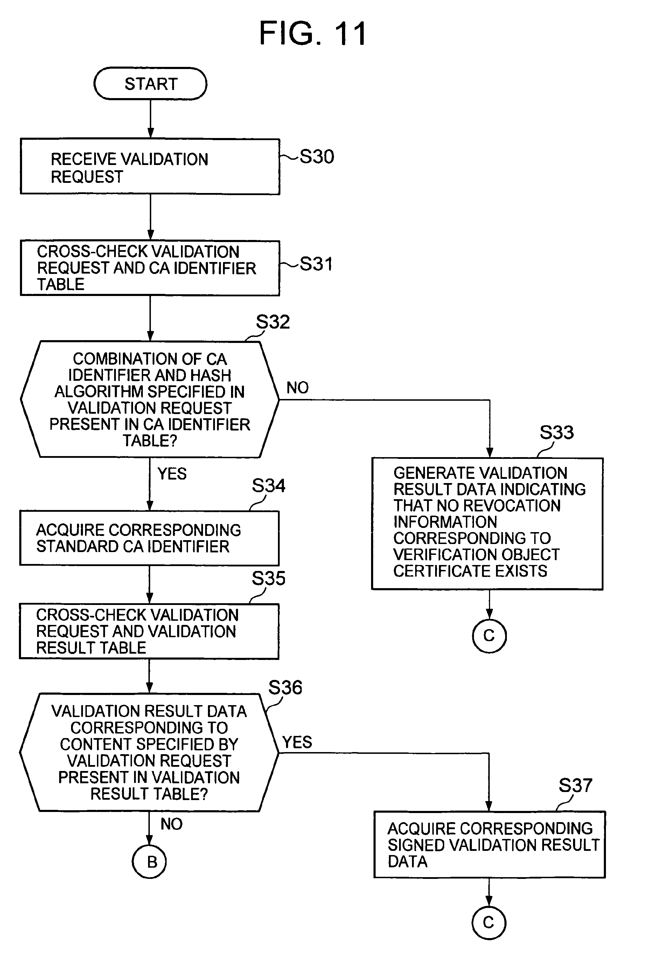

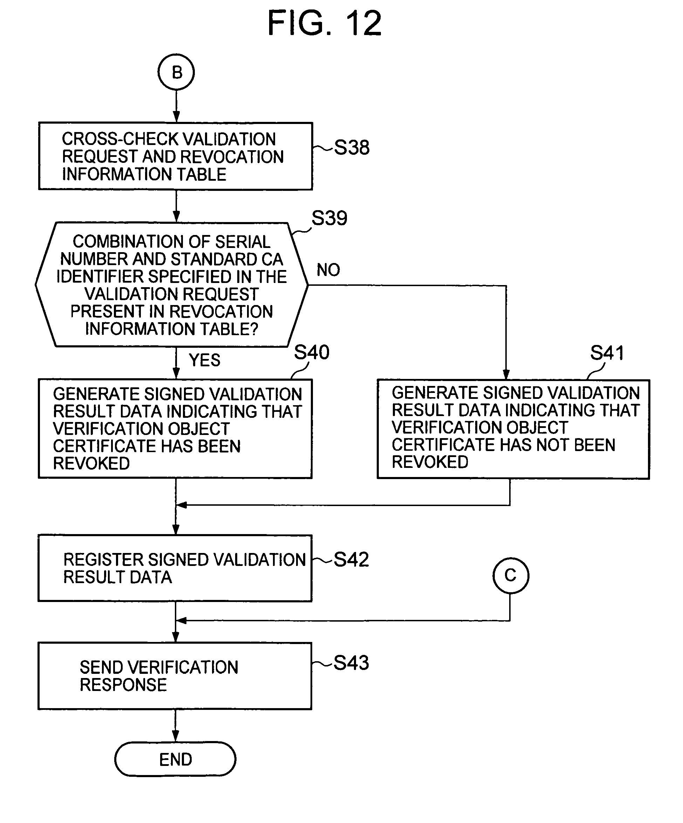

Figs. 11 and 12 are flowcharts showing the processing performed when the validation server 130 verifies a certificate.

First, the validation server 130 receives a validation request generated by the verification part 112b of a terminal apparatus 110 through the communication part 133 (S30).

Next, the verification processing part 132c of the validation server 130 cross-checks the CA identifier table 160 stored in the identifier information storage area 131b and the received validation request (S31) to examine whether the CA identifier corresponding to the validation request exists or not (S32).

In detail, among pieces of information (CertID) that are included in the validation request and specify the verification object certificate, the verification processing part 132c uses the hash algorithm (hashiAlgorithm) and the CA identifier information (issuerNameHash and issuerKeyHash) as keys for searching the CA identifier table 160.

In the case where a CA identifier corresponding to the validation request does not exist in the CA identifier table 160 (S32: No), the verification processing part 132c judges that the validation server 130 does not have revocation information corresponding to the validation request, and generates validation result data indicating to that effect (S33), and proceeds to step S43 of Fig. 12.

On the other hand, in the case where a CA identifier corresponding to the validation request exists in the CA identifier table 160 (S32: Yes), the verification processing part 132c acquires the standard CA identifier corresponding to the CA identifier in question from the CA identifier table 160 (S34).

Then, using the standard CA identifier acquired in step S34 as a key, the verification processing part 132c cross-checks the validation result in question and the validation result table 180 (S35).

In detail, using the standard CA identifier as a key, the verification processing part 132c searches the CA identifier column 180a of the validation result table 180 for CA identifiers corresponding to the standard CA identifier. Then, the verification processing part 132c examines whether, among respective pieces of signed validation result data corresponding to the retrieved CA identifiers, there exists a piece of signed validation result data for which the information (CertID) (i.e. information specifying a verification object certificate) included in that piece of signed validation result data is identical to the information (CertID) (i.e. information specifying the verification object certificate) included in the validation request.

In the case where signed validation result data including the same CertID as that of the validation request exist in the validation result table 180 (S36: Yes), the verification processing part 132c acquires the signed validation result data (S37) and proceeds to step S43.

On the other hand, in the case where signed validation result data including the same CertID as that of the validation request do not exist in the validation result table 180 (S36: No), the verification processing part 132c cross-checks the validation request and the revocation information table 170 (S38).

In detail, using the standard CA identifier acquired in step S34 as a key, the verification processing part 132c searches the CA identifier column 170a of the revocation information table 170 to specify the CA identifier that is same as the standard CA identifier. Then, the verification processing part 132c compares the serial number (serialNumber of CertID) of the verification object certificate included in the validation request in question with serial numbers in the serial number column 170c of revoked certificates corresponding to the specified CA identifier, to examine whether the serial number of the verification object certificate is stored in the serial number column 170c of the revoked certificates in the revoked information table 170.

In the case where the serial number of the verification object certificate included in the validation request exists in the revocation information table 170 (S39: Yes), the verification processing part 132c generates signed validation result data to the effect that the verification object certificate has been revoked (S40).

On the other hand, in the case where the serial number of the verification object certificate included in the validation request does not exist in the revocation information table 170 (S39: No), the verification processing part 132c generates signed validation result data to the effect that the verification object certificate has not been revoked (S41).

Then, the verification processing part 132c stores the signed validation result data generated in step S40 or S41 into the validation result table 180, in association with the standard CA identifier acquired in step S34 of Fig. 11 (S42). Further, the verification processing part 132c stores the current date into the corresponding field of the last use date column 180b in the validation result table 180.

Then, in step S43, the verification processing part 132c sends the validation result data generated in the above steps to the terminal apparatus 110 through the communication part 133.

By performing the above steps, the validation server 130 can efficiently perform the processing that starts from reception of a validation request from a terminal apparatus 110 and ends in return of validation result data. Thus, response time can be reduced.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A validation server for verifying a public key certificate, the server comprising:
a storage part that stores first identification information determined uniquely by key information of a certificate authority and a hash algorithm, respectively; and
a processing part, which judges that validation requested by a validation request can be performed if the storage part stores first identification information corresponding to second identification information determined by key information of a certificate authority, included in the validation request, and a hash algorithm used in producing the validation request.

2. A validation server of Claim 1, wherein:
the first identification information is a hash value that is calculated from key information of a certificate authority by using a hash algorithm supported by the validation server; and
the second identification information is a hash value that is calculated from key information of a certificate authority, included in a validation request, by using any hash algorithm.

3. A validation server of Claim 1, wherein:
the first identification information is a hash value that is calculated from a name of a certificate authority and key information of that certificate authority by using a hash algorithm supported by the validation server; and
the second identification information is a hash value that is calculated by using any hash algorithm from a name of a certificate authority and key information of that certificate authority, which are included in the validation request.

4. A validation server of Claim 1, wherein:
the storage part stores respective first identification information corresponding to respective key information updated by a certificate authority.

5. A validation server of Claim 1, wherein:
the storage part stores first identification information in association with standard identification information for each certificate authority;
the storage part stores revoked certificate identification information, which can identify revoked public key certificates, in association with the standard identification information for each certificate authority; and
the processing part acquires the second identification information from the validation request; specifies, from the storage part, first identification information corresponding to the acquired second identification information; specifies, from the storage part, standard identification information corresponding to the specified first identification information; and acquires revoked certificate identification information corresponding to the specified standard identification information, in order to perform verification by examining whether or not the revoked certificate identification information corresponding to the identification information of a public key certificate added to the validation request exists.

6. A validation server of Claim 1, wherein:
the storage part stores first identification information in association with standard identification information, for each certificate authority;
the storage part stores, in association with the standard identification information for each certificate authority, validation result data that have been already generated; and
the processing part acquires the second identification information from the validation request; specifies, from the storage part, first identification information corresponding to the acquired second identification information; specifies, from the storage part, standard identification information corresponding to the specified first identification information; acquires validation result data corresponding to the specified standard identification information; specifies validation result data for which information that is attached to the validation request and that specifies a public key certificate, matches information that is included in the obtained validation result data and that specifies a verified public key certificate; and outputs the specified validation result data by a method determined in advance.

7. A validation server of Claim 6, wherein:
each time the processing part acquires the revoked certificate identification information by which a revoked public key certificate can be identified, the processing part deletes validation result data whose validity period has expired, among already-generated validation result data stored in the storage part, and updates validation result data revoked according to the acquired revoked certificate identification information into validation result data judged to be revoked.

8. A program that makes a computer function as a validation server for verifying a public key certificate, wherein the program makes the computer function as:
a storage unit, which stores first identification information determined uniquely by key information of a certificate authority and a hash algorithm, respectively; and
a processing unit, which judges that validation requested by a validation request can be performed if the storage part stores first identification information corresponding to second identification information determined by key information of a certificate authority, included in the validation request and a hash algorithm used in producing the validation request.

9. A program of Claim 8, wherein:
the first identification information is a hash value that is calculated from key information of a certificate authority by using a hash algorithm supported by the validation server; and
the second identification information is a hash value that is calculated from key information of a certificate authority, included in a validation request, by using any hash algorithm.

10. A program of Claim 8, wherein:
the first identification information is a hash value that is calculated from a name of a certificate authority and key information of that certificate authority by using a hash algorithm supported by the validation server; and
the second identification information is a hash value that is calculated by using any hash algorithm from a name of a certificate authority and key information of that certificate authority, which are included in the validation request.

11. A program of Claim 8, wherein:
the storage part stores respective first identification information corresponding to respective key information updated by a certificate authority.

12. A program of Claim 8, wherein:
the storage unit stores first identification information in association with standard identification information for each certificate authority;
the storage unit stores revoked certificate identification information, which can identify revoked public key certificates, in association with the standard identification information for each certificate authority; and
the processing unit acquires the second identification information from the validation request; specifies, from the storage unit, first identification information corresponding to the acquired second identification information; specifies, from the storage unit, standard identification information corresponding to the specified first identification information; and acquires revoked certificate identification information corresponding to the specified standard identification information, in order to perform verification by examining whether or not the revoked certificate identification information corresponding to the identification information of a public key certificate added to the validation request exists.

13. A program of Claim 8, wherein^{:}
the storage unit stores first identification information in association with standard identification information for each certificate authority;
the storage unit stores, in association with the standard identification information for each certificate authority, validation result data that have been already generated; and
the processing unit acquires the second identification information from the validation request; specifies, from the storage unit, first identification information corresponding to the acquired second identification information; specifies, from the storage unit, standard identification information corresponding to the specified first identification information; acquires validation result data corresponding to the specified standard identification information; specifies validation result data for which information that is attached to the validation request and that specifies a public key certificate, matches information that is included in the obtained validation result data and that specifies a verified public key certificate; and outputs the specified validation result data by a method determined in advance.

14. A program of Claim 13, wherein:
each time the processing unit acquires the revoked certificate identification information by which a revoked public key certificate can be identified, the processing unit deletes validation result data whose validity period has expired, among already-generated validation result data stored in the storage unit, and updates validation result data revoked according to the acquired revoked certificate identification information into validation result data judged to be revoked.

15. A verification method for verifying a public key certificate by a validation server comprising a storage part that stores first identification information determined uniquely by key information of a certificate authority and a hash algorithm, and a processing part, wherein:
the verification method comprises a process in which the processing part judges that validation requested by a validation request can be performed if the storage part stores first identification information corresponding to second identification information, determined by key information of a certificate authority, included in the validation request, and a hash algorithm used in producing the validation request.
